# EUROPEAN PATENT APPLICATION

(11) **EP 4 659 826 A1**
(43) Date of publication of application: **10.12.2025**
(21) Application number: 23748690.7
(22) Date of filing: 02.02.2023
(51) Int. Cl.: A63D 1/02, A63B 69/36

(54) **SUPPORTING AND FASTENING SYSTEM FOR A PORTABLE DEVICE FOR PLAYING GOLF**

(30) Priority: 03.02.2022 ES 202230168 U
(71) Applicant: Gravit Practice Golf, S.L., Godella 46110 Valencia (ES)
(72) Inventor: PEREZ QUIÑONERO, Jose Luis, 46110 Valencia (ES)
(74) Representative: Falcon Morales, Alejandro
(86) International application number: PCT/ES2023/070055
(87) International publication number: WO 2023/148418

(57) **Abstract**

Support and fixation system for a transportable device for golf practice. consisting of a counterweight (3) made of anodized aluminum with a cylindrical shape with a diameter of 43 mm and a length of 54 mm, weighing 57 g, weighing 57 g. 43 mm in diameter and 54 mm in length, with a weight of 57 g, which has a cylindrical hollow (1) enabled in a lower base (2) of a counterweight (3), in which there is a lower threaded rod (4) which in turn is screwed into a threaded cylinder (4). cylinder (5) fixed in the center of the lower disc (6) and protruding from the (6) and which protrudes to allow the screwing, and which is provided with a coined washer (7) surrounding (7) which surrounds the threaded cylinder (5) and which is fixed to the lower disk (6).

## Description

### INDUSTRY SECTOR

The present invention concerns a series of innovative elements that are incorporated into the transportable device for playing or practising golf with application number 201831621, such as to facilitate its assembly and improve its robustness and stability. The industry sector that the present invention is located in therefore relates to the leisure industry, in particular for playing or practising golf in areas chosen by the user.

### PRIOR ART

The invention is based on the transportable device for playing or practising golf with application number 201831621, comprising two discs designed with a central orifice that are mounted in parallel position on the upper and lower base of a vertical counterweight and fitted with means to anchor the discs to it, thereby creating a stable assembly in vertical position to hold the balls in the perimeter cavity formed between the discs while preventing, thanks to the counterweight and the immobility of the discs, the device assembly from tipping over due to blows from golf balls. This invention has some drawbacks. For example, there is no fastening element to secure the assembly when screwing the counterweight on the discs. Furthermore, the threaded rod of the counterweight protrudes from the lower side, which may pose a risk due to the sharp elements of the thread or create an inconvenience when placing the assembly on a support base.

The present invention solves the aforementioned drawbacks by providing a serrated washer and a new configuration for the cylinders and threaded rods.

### EXPLANATION OF THE INVENTION

In order to achieve the aforementioned design objectives, the invention comprises a cylindrical anodised aluminium counterweight, the lower base of which has a cylindrical recess and a threaded rod that in turn screws into an interior-threaded cylinder protruding from the centre of the lower disc. Furthermore, it has a serrated washer that surrounds the threaded cylinder and is fixed on the lower disc.

This eliminates the protruding lower threaded rod, improving the design and reducing the risk inherent in the protrusion. Furthermore, the serrated washer fastens the counterweight to the lower disc.

The assembly has an upper disc to hold the ball and a mast to secure the upper disc by threading this mast with the upper rod of the counterweight. This achieves the perimeter cavity to house the golf ball. Signage can also be provided on the mast.

Fixed anti-slip silicone studs are provided on the lower disc of the device, acting as a support base to allow the device to adhere to any type of floor or ground.

The support and fastening system for a portable device for playing golf consists of an anodized aluminum counterweight (3) with a cylindrical shape measuring 43 mm in diameter and 54 mm in length, weighing 57 g.

### SHORT DESCRIPTION OF THE DRAWINGS

In order to complement and help understanding of the characteristics of the invention, a sheet of drawings is attached in which, for illustrative and non-limiting purposes, the following have been represented:

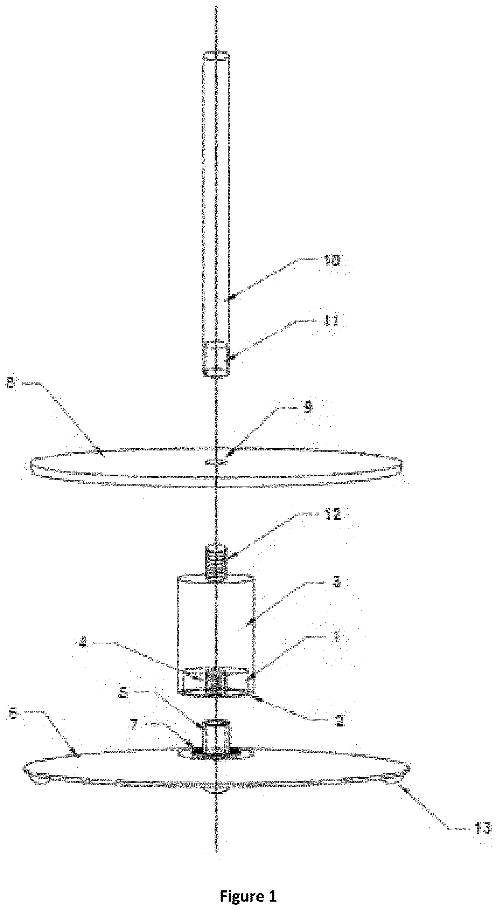

Figure 1.- Shows an elevation view of the disassembled invention.

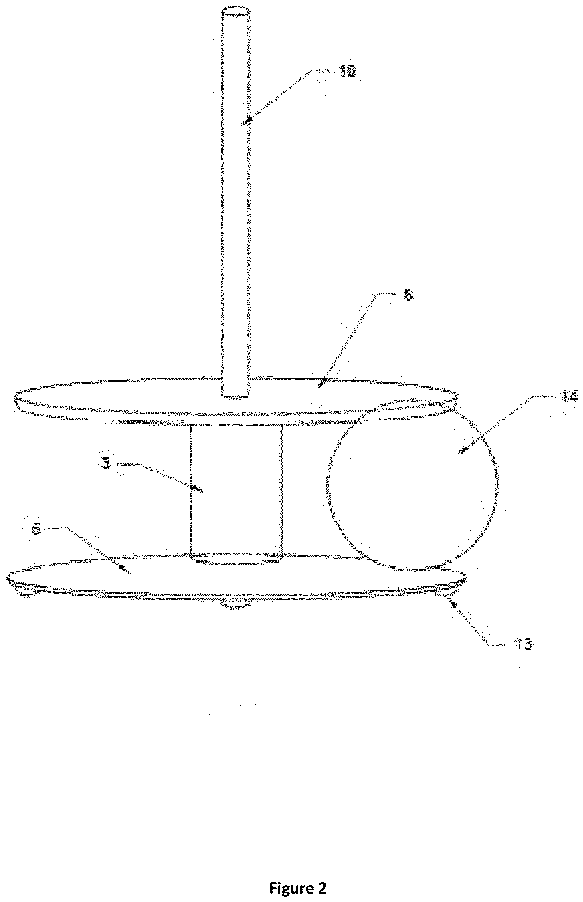

Figure 2.- Shows an elevation view of the assembled invention.

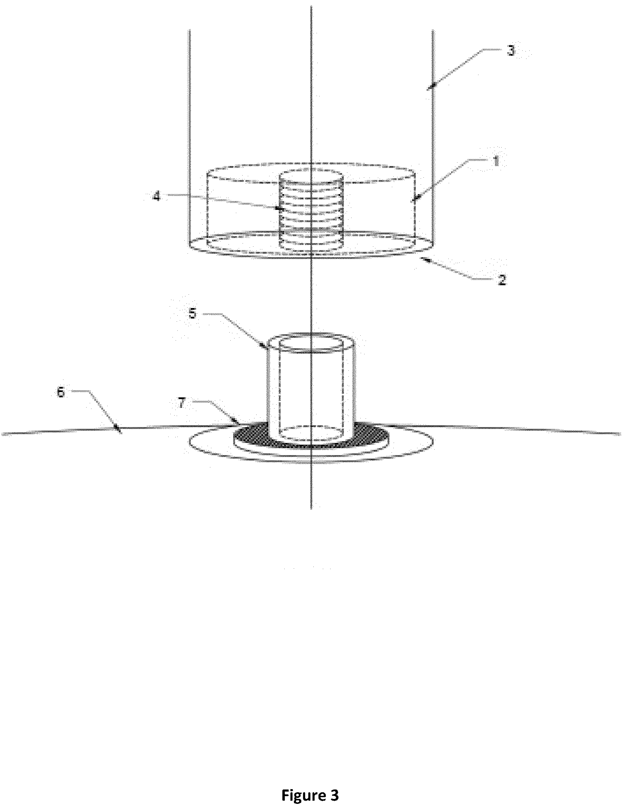

Figure 3.- Detail of the lower base of the invention.

A list of the different elements shown in the figures that make up the invention is provided below.
1 = Cylindrical recess in the lower base of the counterweight
2 = Lower base of counterweight
3 = Counterweight
4 = Lower threaded rod
5 = Lower disc cylinder with interior thread
6 = Lower disc
7 = Serrated washer
8 = Upper disc
9 = Upper disc orifice
10 = Mast
11 = Mast threading
12 = Upper rod and counterweight threading
13 = Non-slip silicone pads
14 = Golf ball

### PREFERRED EMBODIMENT OF THE INVENTION

The invention comprises a cylindrical anodised aluminium counterweight (3), the lower base (2) of which has a cylindrical recess (1) in which there is a lower threaded rod (4) that screws into an interior-threaded cylinder (5) fastened in the centre and protruding from the lower disc (6). Furthermore, it has a serrated washer (7) that surrounds the threaded cylinder (5) and is fixed on the lower disc (6).

The assembly has an upper disc (8) with a central orifice (9) to hold the ball (14) and a mast (10) to secure the upper disc (8) by threading the mast (11) with the upper threaded rod of the counterweight (12). This achieves the perimeter cavity to house the golf ball (14).

Anti-slip silicone studs (13) are fixed on the lower disc (6) of the device, serving as a support base to allow the device to adhere to any type of floor or ground.

## Claims

1. Support and fastening system for a transportable device for playing or practising golf, comprising an anodised aluminium cylindrical counterweight (3) measuring 43 mm in diameter and 54 mm in length and weighing 57 g., **characterised by** having a cylindrical recess (1) in a lower base (2) of the counterweight (3), in which there is a lower threaded rod (4) that screws into an interior-threaded cylinder (5) fixed in the centre of a lower disc (6), which protrudes in order to allow threading and is equipped with a serrated washer (7) surrounding the threaded cylinder (5) and fixed on the lower disc (6).

2. Support and fastening system for a transportable device for playing or practising golf according to claim 1, **characterised by** having anti-slip silicone studs (13) on the lower face of the lower disc (6) in order to secure the support base.
